# EUROPEAN PATENT SPECIFICATION

(11) **EP 0 854 111 B1**
(45) Date of publication and mention of the grant of the patent: **26.04.2006**
(21) Application number: 98300336.9
(22) Date of filing: 19.01.1998
(51) Int. Cl.: C01B 3/50, C01B 3/00

(54) **Apparatus for recovering, refining, and storing hydrogen gas**
Vorrichtung zur Zurückgewinnung, Raffination und Speicherung von Wasserstoffgas
Dispositif de récupéparion, raffinage et de stockage d'hydrogène gazeux

(30) Priority: 20.01.1997 JP 748697
(43) Date of publication of application: 22.07.1998
(73) Proprietor: NGK INSULATORS, LTD., Nagoya City, Aichi Pref. (JP)
(72) Inventor: Kawae, Takayuki, Nagoya-City, Aichi-pref., 458 (JP); Takahashi, Tomonori, Chita-city, Aichi-pref., 478 (JP); Sakai, Osamu, Nagoya-city, Aichi-pref., 455 (JP)
(74) Representative: Paget, Hugh Charles Edward

(56) References cited:
- EP-A- 0 715 880
- GB-A- 1 195 852
- US-A- 3 251 652
- US-A- 5 318 688

## Description

### Background of the Invention and Related Art Statement

The present invention relates to a system comprisings a hydrogen furnace and apparatus for recovering, refining, and storing hydrogen gas. The apparatus enables reuse of used hydrogen gas having a low purity in the hydrogen furnace by refining the used hydrogen gas and storing the refined hydrogen gas.

As hydrogen gas for a hydrogen furnace or as a process gas, or the like, there is used hydrogen gas having a high purity of 99.9% or more so as to avoid oxidation and carbonization of products. However, the purity drops to 70 -

99.0% because impure gas, or the like, is mixed in. Hydrogen gas which purity is dropped has conventionally been regarded as unreusable gas and disposed of by combustion.

When hydrogen gas is carried by a loader out of a hydrogen manufactory to a tank, or when hydrogen gas is produced with an on-site hydrogen producing apparatus, disposal of hydrogen by combustion after every use has had a great loss in view of energy saving and cost.

There has been proposed an apparatus for refining hydrogen gas having a dropped purity with a hydrogen occlusion alloy as a technique to highly purify and reuse a hydrogen gas having a dropped purity by refining. In the apparatus, hydrogen gas having a dropped purity is introduced into a refinement container, only hydrogen gas is absorbed by a hydrogen occlusion alloy installed in the refinement container, the remaining impurity is discharged from the system, and then the hydrogen gas is released from the hydrogen occlusion alloy to be stored in a tank.

However, in the aforementioned apparatus, repeated occlusion of hydrogen gas causes pulverization of the hydrogen occlusion alloy itself, and it sometimes happens that stress is given in the container or that the pulverized alloy is mixed in the hydrogen gas.

Release of hydrogen gas from the hydrogen occlusion alloy is an endothermic reaction, while occlusion of hydrogen gas by the hydrogen occlusion alloy is an exothermic reaction. Therefore, the hydrogen occlusion alloy has to be alternatively reheated so as to occlude and release hydrogen gas. Thus, the apparatus requires a complex operation.

Further, in the aforementioned apparatus, it has been difficult to continuously supply a certain amount of a refined gas because one refinement container is not sufficient for simultaneously conducting occlusion and release. Accordingly, two or more of refinement containers has generally been used and operated with switching alternatively so that one is in an occlusion process when the other is in release process. Since a fluctuation of an amount of supplying a refined gas was controlled to be small, the operation was complex, and a structure of the apparatus has become more intricate.

GB1195852 discloses an apparatus and process which includes passing a hydrogen-containing feedstock stream through a guard zone filled with an adsorbent substance which removes and retains any solids or heavy hydrocarbons or oils; a conditioning zone wherein certain constituents other than hydrogen are acted on and rendered innocuous to the diffusional characteristics of the feedstock; a heat exchanger wherein heat from the product hydrogen and the stripped feedstock stream is transferred to the feedstock stream; a heater zone wherein additional heat is imparted to the feedstock stream to raise its temperature high enough to maintain a preselected diffusion temperature; and a diffusion zone wherein the feedstock stream is directed to impinge on a multiplicity of palladium or palladium alloy foil surfaces on discrete diffusion drum elements. From the diffusion zone, two streams emerge, one being the hydrogen product stream which is manifolded from the several downstream sides of the multiplicity of diffusion foils, and the other the stripped gas stream i.e., the feedstock stream less the hydrogen which has permeated through the diffusion barriers. Both streams are passed through the heat exchanger recited hereinabove and give up some of their heat to the incoming feedstock stream. If further cooling of either the product hydrogen or the stripped gas, or both, is required, the streams are passed through further heat removal apparatus such as for example, water coolers.

The present invention was made in consideration of the aforementioned conditions. The object of the present invention is to provide a system including recovery, refinement, and storage apparatus, which is free from mixing in of a pulverized alloy, which is easily operated, which structure is simple, and which can continuously supply a certain amount of refined gas.

### Summary of the Invention

According to the present invention, there is provided a system comprising a hydrogen furnace and an apparatus for recovering, refining, and storing hydrogen gas, according to claim 1.

Incidentally, in the present invention, hydrogen gas having a purity of 70 - 99.0% which is lowered by use can be refined so as to have a high purity of 99.9% or more.

Additionally, an oil-removal means for removing oil vapor mixed in hydrogen gas is preferably arranged upstream of the palladium film in the recovery and refinement line.

Further, an oxygen-removal means for removing oxygen mixed in hydrogen gas is preferably arranged upstream of the palladium film in the recovery and refinement line.

Furthermore, a filter for removing metallic powder mixed in hydrogen gas is preferably arranged upstream of the palladium film in the recovery and refinement line.

### Brief Description of the Drawings

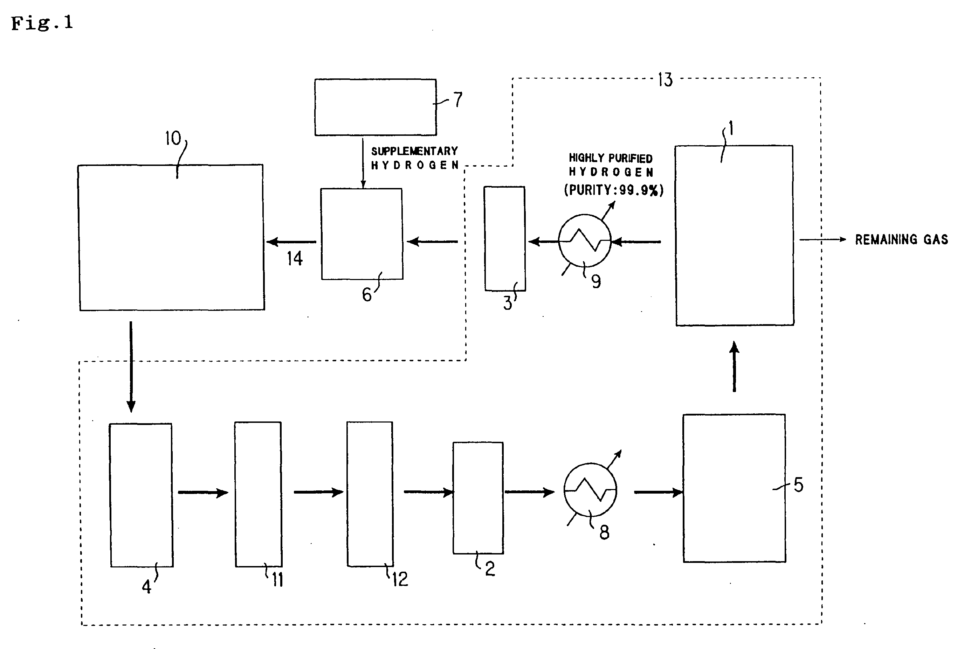

Fig. 1 is an explanatory view showing an outline of a system of the present invention.

### Detailed Description of the Preferred Embodiment

In a system according to the present invention, a palladium film capable of selectively letting only hydrogen gas permeate is installed in a recovery and refinement line. Hydrogen gas having a low purity and containing impure gas is refined to obtain hydrogen gas having high purity (purity of 99.9% or more) and stored in a storage tank, thereby enabling repeated use.

Such an operation and equipment of the present invention, which is simple in comparison with a conventional operation and equipment, enables continuous supply of a certain amount of refined gas.

In the present invention, a recovery and refinement line means an apparatus introducing hydrogen gas having a lowered purity by use in a hydrogen furnace, or the like, and refining the hydrogen gas to obtain high purity by a palladium film unit installed in the line.

Incidentally, in the present invention, a palladium film constituting a palladium film unit means a. film containing palladium as a main component and includes a film containing only palladium and a film made of alloy of palladium and another metal.

As palladium or a palladium alloy, there can be used a known one which solves hydrogen gas in a solid and lets the hydrogen gas permeate. A palladium alloy is preferably used for preventing palladium from hydrogen embrittling and for improving separation efficiency at a high temperature. The palladium alloy further preferably includes Ag, which has a high ability of preventing hydrogen embrittlement.

Incidentally, a content of metals except for palladium is preferably within the range from 10 wt% to 30 wt% as stated in Japanese Membrane Science, 56(1991)315-325: "Hydrogen Permeable Palladium - Silver Alloy Membrane Supported on Porous Ceramics" or in Japanese Patent Laid-Open 63-295402.

As a palladium alloy thin film, there is preferably used a thin film containing palladium and silver and having a relatively uniform distribution of a density of a silver component in a direction of a thickness of the thin film. Palladium and silver can be uniformly distributed by forming a palladium thin film by chemical plating on a surface of a heat resistant porous support, subsequently forming a silver thin film by chemical plating on the palladium thin film, and then giving a thermal treatment.

A palladium film has a thickness of preferably 50 µm or less and more preferably 20 µm or less. When the palladium film is thicker than 50 µm or more, diffusion of a fuel gas in a gas separation film requires longer time, and in its turn requires longer time for treatment.

When the support has a tubular shape, coating of a gas separation film is applied only one of or both the interior surface and the exterior surface.

A pressure-raise instrument such as a compressor is arranged as a pressure-raise means upstream (the side of hydrogen gas containing impurity) of the palladium film installed in the recovery and refinement line. This is because it is necessary to have a difference in pressure between the side of hydrogen gas containing impurity and the side of refined hydrogen gas, i.e., to keep a pressure in the side of hydrogen gas containing impurity higher than a pressure in the side of refined hydrogen gas so that hydrogen gas permeates the palladium film.

Since pressure in the side of refined hydrogen gas falls, a pressure-raise instrument such as a compressor is desirable as a pressure-raise instrument downstream of the palladium film.

Incidentally, there is preferably arranged a means for removing impurities of an oil vapor, a metallic powder, oxygen gas upstream of the palladium film so as to improve refinement efficiency.

In the present invention, a storage tank is a container for temporarily storing at refined hydrogen gas having a high purity by a recovery and refinement line and is installed for a purpose of stably supplying refined hydrogen gas to a hydrogen furnace through a resupply line.

Thus, hydrogen gas with a lowered purity by mixing in of impure gas is refined by a palladium film unit and stored in a tank. This enables to continuously introduce hydrogen gas having a purity of 99.9% or more into a hydrogen furnace.

In the aforementioned refinement means using a palladium film, it is necessary only to maintain a temperature of gas permeating the film to a certain value or higher so that properties of a palladium film is sufficiently exhibited, and alternatively repeated operation of heating and cooling is not necessary unlike a conventional apparatus using hydrogen occlusion alloy. Additionally, because of a simple refinement mechanism, a composition of the apparatus can be made simple.

The present invention is hereinbelow described in detail with reference to the drawing. However, the present invention is by no means limited to the Embodiments.

Fig. 1 is an explanatory view showing an outline of a system of the present invention with a hydrogen furnace. Reference numeral 10 denotes a hydrogen furnace, 1 denotes a palladium film unit in which a palladium film is included. Reference numerals 3, 4, 5, 6 and 7 denote a pressure-raise instrument, an oil-removal tube, an oxygen-removal tube, a storage tank, and a spare tank for supplementation of hydrogen. Reference numerals 8 and 9 denote heat exchangers for temperature-raise. Reference numerals 11, 12, 13, and 14 denote a desulfurizer, a filter, a recovery and refinement line, and a resupply line.

The hydrogen furnace 10 contains hydrogen gas introduced from the storage tank 6. The hydrogen gas is used in the hydrogen furnace 10, and its purity is lowered by mixing in of impure gas. The hydrogen gas is refined so as to have a high purity by a palladium film unit 1 in the recovery and refinement line 13. The refined hydrogen gas is stored in the storage tank 6, and then the hydrogen gas is introduced into the hydrogen furnace 10 again by the resupply line 14.

Thus, a hydrogen gas having a purity of 99.9% or more can be introduced into the hydrogen furnace 10 by refining a hydrogen gas having a lowered purity because of mixing in of an impure gas by the palladium film unit 1 and storing in the storage tank 6.

Upstream (the side of hydrogen gas containing impurities) of the palladium film unit 1 there is provided a pressure-raise instrument 2 such as a compressor as a pressure-raise means. This enables to make a pressure in the side of hydrogen gas containing impurities higher than a pressure in the side of refined hydrogen gas and to make hydrogen gas pass through the palladium film unit 1.

Further, in order to avoid lowering of a pressure in the side of refined hydrogen gas, downstream of the palladium film unit 1 in the recovery and refinement line 13 there is a pressure-raise instrument 3 such as compressor as a pressure-raise means.

Incidentally, these pressure-raise instruments must be unexplosive because hydrogen gas is used and oil-free without mixing in of an oil mist.

Incidentally, the following apparatus is arranged upstream of the palladium film unit 1 in the recovery and refinement line 13 depending on a kind of impurities in the hydrogen gas.

When an oil vapor is present in hydrogen gas containing impurities, an oil-removal tube 4 is preferably arranged. This can prevent the oil vapor from adhering to the palladium film, thereby avoiding lowering of a hydrogen gas permeability. As an oil-removal means, there is suitably used, for example, an activated carbon, which can adsorb and remove an oil vapor.

When a sulfur component deriving from a subject treated in a furnace is mixed in the hydrogen gas containing impurities, a desulfurizer 11 which removes the sulfur component is preferably arranged. This is because adhering of a sulfur component to a palladium film may cause lowering of a hydrogen gas permeability.

When a metallic powder is mixed in hydrogen gas containing impurities, a filter 12 is preferably arranged. This can avoid lowering of airtightness because of a pinhole generated by a reaction of the metallic powder to the palladium film. As a filter there can be used, for example, a ceramic filter.

When a high concentration of oxygen (O₂) is contained in hydrogen gas containing impurities, an oxygen-removal tower 5 is preferably arranged. This can control lowering of a recovery rate of hydrogen gas by oxidation of hydrogen on a palladium film and a danger of explosion caused when oxygen partial pressure in the side of remaining gas rises and becomes within the range of hydrogen combustion.

As an oxygen removing means, there can be suitably used, for example, a palladium catalyst, silica gel, and the like. The palladium catalyst is composed mainly of a metallic powder containing palladium as a main component and activates oxidation of hydrogen so that hydrogen reacts to oxygen to give water. Silica gel dehumidifies the water.

Incidentally, O₂ Concentation in hydrogen gas to be treated is preferably lowered to several ppm by the oxygen-removal means before the gas reaches the palladium film.

A storage tank 6 may be provided with a spare tank 7 for supplementation of hydrogen. This enables supply of hydrogen gas having high purity more stably.

As described above, a used hydrogen gas can be highly purified by recovering and refining and stored in a storage tank for reuse by use of a system of the present invention. Further, the system of the present invention has a simple structure and can be easily operated. Furthermore, an apparatus of the present invention is free from scattering or the like of alloy powder, which is caused by an apparatus using a hydrogen occlusion alloy.

## Claims

1. A system comprising a hydrogen furnace (10) and an apparatus for recovering, refining, and storing hydrogen gas, said apparatus comprising:
a recovery and refinement line (13) for recovering and refining hydrogen gas to be used for the hydrogen furnace (10);
a storage tank (6) for storing refined gas; and
a resupply line (14) for resupplying a stored gas in the storage tank (6) to the hydrogen furnace;
wherein a palladium film (1) is installed in the recovery and refinement line and is arranged to permit hydrogen gas to permeate the palladium film so as to be refined;
wherein hydrogen for recovery and refinement is supplied to said recovery and refinement line (13) from said hydrogen furnace, and in the recovery and refinement line (13) there is, upstream of said palladium film, a first pressure-increasing means (2) and a first heat exchanger (8), said first heat exchanger (8) being downstream of the first pressure increasing means (2), and, downstream of the palladium film (1), a second heat exchanger (9) and a second pressure-increasing means (3), said second pressure-increasing means (3) being downstream of the second heat exchanger (9).

2. A system according to claim 1, wherein an oil-removal means (4) for removing oil vapour mixed in hydrogen gas is arranged upstream of said palladium film (1) in the recovery and refinement line.

3. A system according to claim 1 or 2, wherein an oxygen-removal means (5) for removing oxygen mixed in hydrogen gas is arranged upstream of said palladium film in the recovery and refinement line.

4. A system according to claim 3 wherein said oxygen-removal means (5) is downstream of said first heat exchanger (8).

5. A system according to any one of claims 1 to 4, wherein a filter (12) for removing metallic powder mixed in hydrogen gas is arranged upstream of said palladium film in the recovery and refinement line.

6. A system according to any one of claims 1 to 5, wherein a spare tank (7) for supplementation is arranged connected to said storage tank (6).

## Patentansprüche

1. System, umfassend einen Wasserstoffofen (10) und eine Vorrichtung zur Rückgewinnung, Reinigung und Lagerung von Wasserstoffgas, wobei die Vorrichtung Folgendes umfasst:
eine Rückgewinnungs- und Reinigungsleitung (13) zur Rückgewinnung und Reinigung von Wasserstoffgas, das für den Wasserstoffofen (10) zu verwenden ist;
einen Speichertank (6) zum Speichern von gereinigtem Gas; und
eine Rückspeiseleitung (14), um ein im Speichertank (6) gespeichertes Gas wieder dem Wasserstoffofen (10) zuzuführen;
worin eine Palladiumfolie (1) in der Rückgewinnungs- und Reinigungsleitung (13) eingebaut und angeordnet ist, um Wasserstoffgas durch die Palladiumfolie durchtreten zu lassen, um gereinigt zu werden;
worin der Rückgewinnungs- und Reinigungsleitung (13) der Wasserstoff zur Rückgewinnung und Reinigung aus dem Wasserstoffofen (10) zugeführt wird und worin in der Rückgewinnungs- und Reinigungsleitung (13) stromaufwärts der Palladiumfolie ein erstes Druckanhebungsmittel (2) und ein erster Wärmetauscher (8) angeordnet sind, wobei der erste Wärmetauscher (8) stromabwärts des ersten Druckanhebungsmittels (2) angeordnet ist, und worin stromabwärts der Palladiumfolie (1) ein zweiter Wärmetauscher (9) und ein zweites Druckanhebungsmittel (3) angeordnet sind, wobei das zweite Druckanhebungsmittel (3) stromabwärts des zweiten Wärmetauschers (9) angeordnet ist.

2. System nach Anspruch 1, worin ein Ölentfernungsmittel (4) zur Entfernung von Öldampf, der im Wasserstoffgas eingemischt ist, in der Rückgewinnungs- und Reinigungsleitung stromaufwärts der Palladiumfolie (1) angeordnet ist.

3. System nach Anspruch 1 oder 2, worin ein Sauerstoffentfernungsmittel (5) zur Entfernung von Sauerstoff, der im Wasserstoffgas eingemischt ist, in der Rückgewinnungs- und Reinigungsleitung stromaufwärts der Palladiumfolie angeordnet ist.

4. System nach Anspruch 3, worin das Sauerstoffentfernungsmittel (5) stromabwärts des ersten Wärmetauschers (8) angeordnet ist.

5. System nach einem der Ansprüche 1 bis 4, worin ein Filter (12) zur Entfernung von Metallpulver, das im Wasserstoffgas eingemischt ist, in der Rückgewinnungs- und Reinigungsleitung stromaufwärts der Palladiumfolie angeordnet ist.

6. System nach einem der Ansprüche 1 bis 5, worin ein Reservetank (7) zur Ergänzung angeordnet und mit dem Speichertank (6) verbunden ist.

## Revendications

1. Un système comprenant un four à hydrogène (10) et un dispos itif de récupération, raffinage et stockage d'hydrogène gazeux, ledit dispositif comprenant:
une ligne de récupération et de raffinage (13) pour récupérer et raffiner l'hydrogène gazeux devant être utilisé pour le four à hydrogène (10);
un réservoir de stockage (6) pour stocker le gaz raffiné; et
une ligne de réalimentation (14) pour réalimenter vers le four à hydrogène un gaz stocké dans le réservoir de stockage (6);
où un film de palladium (1) est placé dans la ligne de récupération et de raffinage et est disposé pour permettre à l'hydrogène gazeux de passer à travers le film de palladium de manière à être raffiné;
où l'hydrogène pour récupération et raffinage est amené vers ladite ligne de récupération et de raffinage (13) depuis le dit four à hydrogène et, dans la ligne de récupération et de raffinage (13), se trouve nt, à l'amont dudit film de palladium, un premier moyen d'augmentation de pression (2) et un premier échangeur de chaleur (8), ledit premier échangeur de chaleur (8) étant à l'aval du premier moyen d'augmentation de pression (2), et, à l'aval du film de palladium (1), un second échangeur de chaleur (9) et un second moyen d'augmentation de pression (3), ledit second moyen d'augmentation de pression (3) étant à l'aval du second échangeur de chaleur (9).

2. Un système selon la revendication 1, dans lequel un moyen de retrait d'huile (4) pour retirer des vapeurs d'huile mélangées à l'hydrogène gazeux est disposé à l'amont dudit film de palladium (1) dans la ligne de récupération et de raffinage.

3. Un système selon la revendication 1 ou 2, dans lequel un moyen de retrait d'oxygène (5) pour retirer l'oxygène mélangé à l'hydrogène gazeux est disposé à l'amont dudit film de palladium dans la ligne de récupération et de raffinage.

4. Un système selon la revendication 3 dans lequel ledit moyen de retrait d'oxygène (5) est à l'aval dudit premier échangeur de chaleur (8).

5. Un système selon l'une quelconque des revendications 1 à 4, dans lequel un filtre (12) pour retirer des poudres métalliques mélangées à l'hydrogène gazeux est disposé à l'amont dudit film de palladium dans la ligne de récupération et de raffinage.

6. Un système selon l'une quelconque des revendications 1 à 5, dans lequel est disposé un réservoir de réserve (7) pour une amenée supplémentaire en étant reliée audit réservoir de stockage (6).
